# EUROPEAN PATENT APPLICATION

(11) **EP 4 496 432 A1**
(43) Date of publication of application: **22.01.2025**
(21) Application number: 22945590.2
(22) Date of filing: 29.11.2022
(51) Int. Cl.: H05B 6/36

(54) **COIL ASSEMBLY AND ELECTROMAGNETIC COOKING UTENSIL**

(30) Priority: 10.06.2022 CN 202210660523
(71) Applicant: Foshan Shunde Midea Electrical Heating Appliances Manufacturing Co., Limited, Foshan, Guangdong 528311 (CN)
(72) Inventor: PENG, Wenbin, Foshan, Guangdong 528311 (CN); YI, Liang, Foshan, Guangdong 528311 (CN); ZHANG, Yifei, Foshan, Guangdong 528311 (CN); WU, Jinhua, Foshan, Guangdong 528311 (CN); LIU, Bowen, Foshan, Guangdong 528311 (CN)
(74) Representative: RGTH
(86) International application number: PCT/CN2022/134995
(87) International publication number: WO 2023/236462

(57) **Abstract**

Disclosed are a coil assembly and an electromagnetic cooking appliance. The coil assembly includes an installation bracket, a coil winding, and a magnet. The installation bracket
includes two installation sides arranged opposite to each other. The coil winding is installed on
5 one of the installation sides. The magnet is arranged on the other of the installation sides, and
the magnet is configured to be installed on the electromagnetic cooking appliance.

## Description

### CROSS-REFERENCE TO RELATED APPLICATIONS

The present application claims priority to Chinese Patent Applications No. 202210660523.3, filed on June 10, 2022, the entire contents of which are incorporated herein by reference.

### TECHNICAL FIELD

The present application relates to the technical field of cooking appliances, in particular to a coil assembly and an electromagnetic cooking appliance.

### BACKGROUND

In home appliances, electromagnetic heating methods are almost universally popular. Especially for multi-head stoves, induction cookers, etc. that use electromagnetic heating, the electromagnetic heating position is almost always fixed to one or several positions. There are no heating coils in the rest of the heating panel, and can only perform local heating, and it needs to be aligned with the heating position when used. If the position is off, it will affect the cooking effect. Therefore, multiple heating points need to be set up for full-area heating. However, the magnets and coil winding in the traditional electromagnetic heating coil plate need to be installed in combination. The structure is complex and is not suitable for induction cookers installed in full-area heating.

### SUMMARY

### TECHNICAL PROBLEM

The main purpose of the present application is to propose a coil assembly and an electromagnetic cooking appliance, aiming to provide an electromagnetic heating coil plate structure suitable for installation in a full-area heating induction cooker.

### TECHNICAL SOLUTION

In order to achieve the above purpose, the present application proposes a coil assembly, comprising:
an installation bracket comprising two installation sides arranged oppositely;
a coil winding installed on one of the installation sides; and
a magnet provided on the other of the installation sides and being installed on an electromagnetic cooking appliance.

The present application also proposes an electromagnetic cooking appliance, comprising:
a shell comprising an installation base and a panel covering the installation base; a plurality of installation stations are provided on the installation base; and
a plurality of coil assemblies installed corresponding to the plurality of installation stations; the coil assemblies comprise the coil assembly;

At each of the installation stations, the coil winding, the installation bracket, and the magnet are stacked in sequence along a direction from the panel to the installation base.

In an embodiment, at each of the installation stations, the magnet is clamped and fixed at a corresponding installation station.

In an embodiment, the installation base is provided with a convex portion to form the installation station; and

the magnet is provided with a first through hole, and the convex portion passes through the first through hole and clamps.

In an embodiment, the installation bracket is further equipped with a fastener on the installation side where the magnet is installed; the installation base is provided with a buckle portion, and the fastener passes through the first through hole of the magnet and is buckled on the buckle portion.

In an embodiment, the installation base is provided with a buckle groove, and the buckle groove forms a corresponding buckle portion.

In an embodiment, the buckle groove is an elongated groove; and
the fastener is arranged in a long shape.

In an embodiment, the installation base is provided with a first rib on a side close to the magnet and around a periphery of the buckle groove to form the convex portion.

In an embodiment, the installation bracket is provided with a second through hole, and the fastener is hollow; and
the second through hole is communicated with a cavity of the fastener to form a wire passage.

In an embodiment, the installation bracket is provided with a second rib on one of the installation sides where the coil winding is installed and on a periphery of the second through hole, and the second rib is arranged in a semi-encircling manner to form a wire groove communicating with the second through hole.

In an embodiment, the installation base comprises:
a base; and
a plurality of installation bars arranged at intervals in the base; each of installation bars is provided with a plurality of buckle grooves.

In an embodiment, each of the installation bars is movable along a direction from the base to the panel, and at least one elastic resisting member is installed between the installation bar and the base.

In an embodiment, each of the installation bars is provided with at least one sliding portion on a side close to the base; and

the base is provided with at least one chute corresponding to the sliding portion, and the sliding portion is movably provided in a corresponding chute to guide a movement of a corresponding installation bar.

In an embodiment, a groove is provided on the installation base to form the installation station; and
the magnet is clamped and embedded through the groove.

In an embodiment, the installation base comprises:
base; and
a plurality of installation bars arranged at intervals in the base; each of the installation bars is provided with a plurality of grooves on a side close to the base.

### BENEFICIAL EFFECT

In the technical solution of the present application, the coil assembly is configured to be installed in an electromagnetic cooking appliance. The electromagnetic cooking appliance has multiple installation stations, and each installation station can be installed with one of the coil assemblies. Each coil assembly forms a heating unit located in the electromagnetic cooking appliance; the coil winding is installed on one of the installation sides of the installation bracket to be provided close to the panel of the electromagnetic cooking appliance when the installation bracket is installed on the corresponding installation station, so as to heat the pot located on the panel. Since the magnet is provided on the other installation side of the installation bracket, when the installation bracket is installed at the corresponding installation station, the magnet is independently installed at the installation station, thereby exerting a magnetization effect on the corresponding coil winding to improve the heating efficiency of the pot; compared with the related art in which the coil winding and the magnet are combined and installed in the electromagnetic heating coil plate, and another fixed bracket needs to be installed between the coil winding and the magnet to separate the magnet and the coil winding, the present application makes the magnet and the installation bracket independent of each other, and the magnet can be installed directly at the corresponding installation station. The specific installation forms and installation positions are diverse, and the magnet installation method is simple; there is no need to install the magnet on the installation bracket, and the assembly structure of the coil assembly is simple.

### BRIEF DESCRIPTION OF THE DRAWINGS

In order to more clearly illustrate the technical solutions in the embodiments of the present application or the related art, the following will briefly introduce the drawings that need to be used in the description of the embodiments or the related art. Obviously, the accompanying drawings in the following description are only some embodiments of the present application, and those skilled in the art can also obtain other drawings according to the structures shown in these drawings without creative effort.
FIG. 1 is a three-dimensional exploded schematic diagram of an electromagnetic cooking appliance according to an embodiment of the present application.
FIG. 2 is a schematic diagram of an assembly structure of a coil assembly and an installation bar in FIG. 1.
FIG. 3 is a three-dimensional exploded structural diagram of the assembly of the coil assembly and the installation bar in FIG. 2.
FIG. 4 is a schematic diagram of the exploded structure of the coil assembly in FIG. 2.
FIG. 5 is a schematic diagram of the assembly structure of the coil assembly and the installation bar in FIG. 1 according to another embodiment.
FIG. 6 is a schematic diagram of the exploded structure of the coil assembly in FIG. 5.

### Explanation of reference signs:

| reference sign | name | reference sign | name |
|---|---|---|---|
| 100 | electromagnetic cooking appliance | 4a | first rib |
| 1 | shell | 5 | first through hole |
| 101 | installation base | 6 | fastener |
| 10a | base | 7 | buckle portion |
| 101a | installation bottom plate | 7a | buckle groove |
| 102a | shell base | 8 | second through hole |
| 10b | installation bar | 9 | second rib |
| 102 | panel | 10 | wire groove |
| 2 | magnet | 11 | elastic resisting member |
| 3 | coil assembly | 12 | sliding portion |
| 301 | coil winding | 13 | groove |
| 302 | installation bracket | 14 | third through hole |
| 303 | heat insulation plate | 15 | cooling fan |
| 304 | temperature measuring member | 16 | circuit integrated main board |
| 4 | convex portion | 17 | display control panel |

The realization, functional features and advantages of the present application will be further described in conjunction with the embodiments and with reference to the accompanying drawings.

### DETAILED DESCRIPTION OF THE EMBODIMENTS

The following will clearly and completely describe the technical solutions in the embodiments of the present application with reference to the accompanying drawings in the embodiments of the present application. Obviously, the described embodiments are only part of the embodiments of the present application, not all of them. Based on the embodiments in the present application, all other embodiments obtained by those skilled in the art without creative efforts fall within the protection scope of the present application.

It should be noted that if there is a directional indication (such as up, down, left, right, front, back...) in the embodiment of the present application, the directional indication is only configured to explain the relationship between the components in a certain posture. If the specific posture changes, the directional indication will also change accordingly.

In addition, if there are descriptions involving "first", "second", etc. in the embodiments of the present application, the descriptions of "first", "second", etc. are only for descriptive purposes, and cannot be understood as indicating or implying their relative importance or implicitly indicating the number of indicated technical features. Thus, the features defined as "first" and "second" may explicitly or implicitly include at least one of these features. In addition, if "and/or" appears throughout the text, its meaning includes three parallel plans, taking "A and/or B" as an example, including plan A, or plan B, or A and B is a solution that is satisfied at the same time. In addition, the technical solutions of the various embodiments can be combined with each other, but it must be based on the realization of those skilled in the art. When the combination of technical solutions is contradictory or cannot be realized, it should be considered that the combination of technical solutions does not exist, nor within the protection scope required by the present application.

In home appliances, electromagnetic heating methods are almost universally popular. Especially for multi-head stoves, induction cookers, etc. that use electromagnetic heating, the electromagnetic heating position is almost always fixed to one or several positions. There are no heating coils in the rest of the heating panel, and can only perform local heating, and it needs to be aligned with the heating position when used. If the position is off, it will affect the cooking effect. Therefore, multiple heating points need to be set up for full-area heating. However, the magnet and coil winding in the traditional electromagnetic heating coil plate need to be installed in combination. The structure is complex and is not suitable for induction cookers installed in full-area heating.

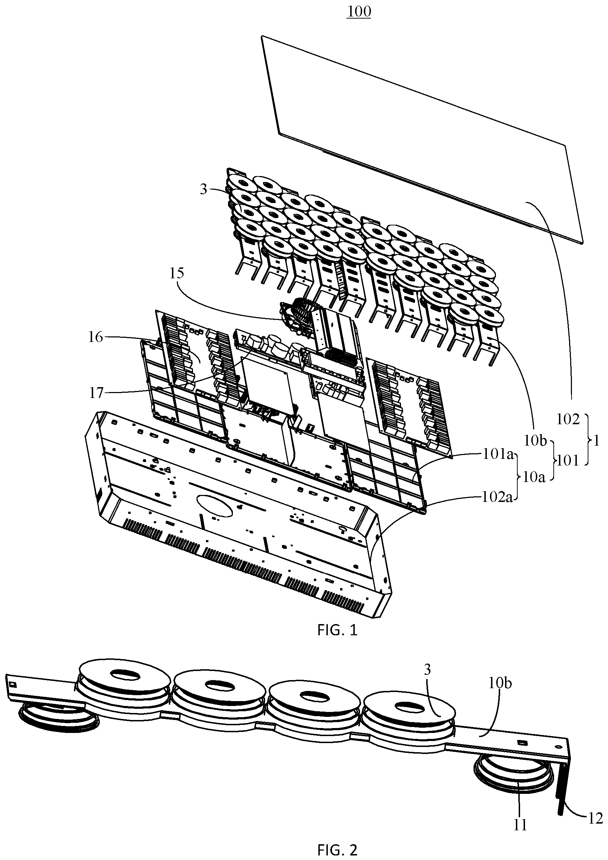

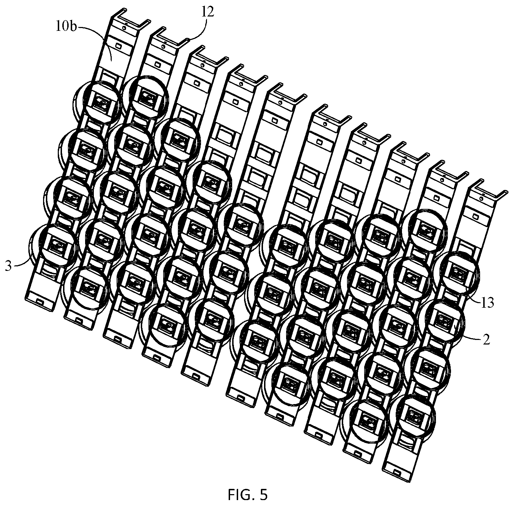

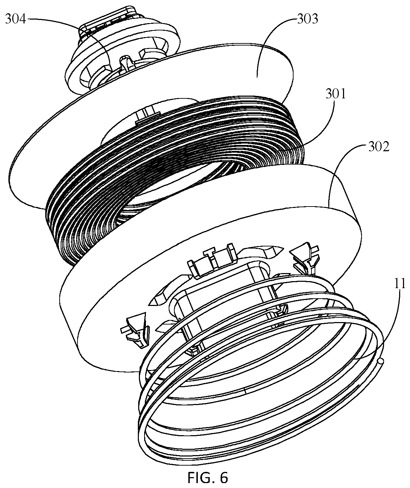

In view of this, the present application proposes a coil assembly, and FIGS. 1 to 6 illustrate an embodiment of the present application.

Referring to FIGS. 1 to 3, the coil assembly 3 includes a installation bracket 302, a coil winding 301 and a magnet 2. The installation bracket 302 includes two opposite installation sides; the coil winding 301 is installed on one of the installation sides; the magnet 2 is provided on the other of the installation sides, and the magnet 2 is configured to be installed on the electromagnetic cooking appliance 100.

In the technical solution of the present application, the coil assembly 3 is configured to be installed in the electromagnetic cooking appliance 100; the electromagnetic cooking appliance 100 has multiple installation stations, and each installation station can be installed with one coil assembly 3. Each coil assembly 3 forms a heating unit located in the electromagnetic cooking appliance 100; the coil winding 301 is installed on one of the installation sides of the installation bracket 302, so that when the installation bracket 302 is installed on the corresponding installation station, it is set close to the panel 102 of the electromagnetic cooking appliance 100 to heat the pot on the panel 102. Since the magnet 2 is provided on the other installation side of the installation bracket 302, when the installation bracket 302 is installed on the corresponding installation station, the magnet 2 is independently installed on the installation station, thereby exerting a magnetization effect on the corresponding coil winding 301 to improve the heating efficiency of the pot. Compared with the related art, which combines coil winding and magnets in an electromagnetic heating coil plate and requires an additional fixed bracket between the coil winding and magnets to separate the magnets and coil winding, the present application makes the magnet 2 and the installation bracket 302 independent with each other. The magnet 2 can be directly installed at the corresponding installation station, and the specific installation forms and installation positions are diversified. The installation method of the magnet 2 is simple, and there is no need for the installation bracket 302 to install the magnet 2 anymore, and the assembly structure of the coil assembly 3 is simple.

Furthermore, since the electromagnetic cooking appliance 100 to which the coil assembly 3 is applied is provided with a plurality of installation stations, and the coil assembly 3 is installed corresponding to each installation station. That is, a plurality of the coil assemblies 3 are densely distributed at the inside of the panel 102, so that the entire area of the panel 102 can be placed with pots and pans for heating; and the larger the size of the coil assembly 3, the greater the heating blind area between the two adjacent coil assemblies 3. This may affect the heating effect of the electromagnetic cooking appliance 100 on the pot. In an embodiment, the outer diameter of the coil assembly 3 is less than or equal to 80 mm.

Please referring to FIGS 1 to 3 again, the present application also proposes an electromagnetic cooking appliance 100. The electromagnetic cooking appliance 100 includes a shell 1 and a plurality of coil assemblies 3. The shell 1 includes a installation base 101 and a panel 102 covering the installation base 101. The installation base 101 is provided with a plurality of installation stations. On each of the installation stations, the coil winding 301, the installation bracket 302, and the magnet 2 are stacked in sequence along the direction from the panel 102 to the installation base 101. The specific structure of the coil assembly 3 refers to the above-mentioned embodiments. Since the electromagnetic cooking appliance 100 adopts all the technical solutions of all the above-mentioned embodiments, it also has the beneficial effects brought by the technical solutions of the above-mentioned embodiments, which will not be discussed here.

That is, a plurality of installation stations are provided on the installation base 101, and the coil assembly 3 is installed corresponding to each installation station to form a heating unit located in the electromagnetic cooking appliance 100. The coil assembly 3 includes the installation bracket 302 and the coil winding 301. The coil winding 301 is installed on the installation bracket 302, so that when the installation bracket 302 is installed on the corresponding installation station, it is arranged close to the panel 102 to heat the pot on the panel 102. At each installation station, the magnet 2 is installed independently and is provided on the side of the coil winding 301 close to the installation base 101, thereby exerting a magnetization effect on the corresponding coil winding 301 to improve the heating efficiency of the pot; compared with the related art, in which the coil winding and the magnet are combined and installed in the electromagnetic heating coil plate, and another fixed bracket needs to be installed between the coil winding and the magnet to separate the magnet and the coil winding, the present application makes the magnet 2 and the installation bracket 302 independent of each other. The magnet 2 can be directly installed on the corresponding installation station, and the specific installation forms and installation positions are diverse. The installation method of the magnet 2 is simple. There is no need to install the magnet 2 on the installation bracket 302. The assembly structure of the coil assembly 3 is simple.

The specific type of the electromagnetic cooking appliance 100 is not limited. In this embodiment, the electromagnetic cooking appliance 100 can be an induction cooker; in addition, when each installation bracket 302 is installed at the corresponding installation station, the coil winding 301, the installation bracket 302 and the magnet 2 are stacked in sequence. That is, correspondingly, the installation bracket 302 is located between the magnet 2 and the coil winding 301. The magnet 2 and the coil winding 301 are spaced apart to prevent the installation distance between the magnet 2 and the coil winding 301 from being too close, causing the coil winding 301 to be subjected to discharge breakdown with the influence of the magnet 2 when alternating current is passed through it during operation.

Furthermore, since the magnet 2 is independently installed on the installation station, in order to avoid that, after the magnet 2 is installed on the installation station, the position relationship between the magnet2 and the corresponding coil assembly 3 will be offset during the use of the electromagnetic cooking appliance 100 so as to affect the magnetization effect of the corresponding coil winding 301; specifically, at each installation station, the magnet 2 is clamped and fixed on the corresponding installation station. By arranging the magnet 2 to be clamped and installed on the corresponding installation station, compared with the conventional method of fixing the magnet 2 by gluing in the related art, the magnet 2 is abutted and fixed rigidly on the installation station, which can limit the relative offset between the magnet 2 and the coil winding 301 in multiple directions; in addition, the magnet 2 can also be clamped at the installation station through adhesive way to bond with the contact plane to achieve better fixation.

In an embodiment, the installation base 101 is provided with a convex portion 4 to form the installation station; the magnet 2 is provided with a first through hole 5, and the first through hole 5 is configured for the convex portion 4 to insert and clamp in place. By providing the convex portion 4 at each installation station, when the convex portion 4 is embedded in the corresponding first through hole 5, its outer peripheral portion is abutted against the hole wall of the first through hole 5 in order to limit and fix the magnet 2.

In another embodiment, the installation base 101 is provided with a groove 13 to form the installation station; correspondingly, the groove 13 is configured for the magnet 2 to be clamped and embedded. By providing a groove 13 on each installation station, the groove 13 is configured for the corresponding magnet 2 to be embedded, and the groove wall part abuts the outer periphery of the magnet 2, so that the circumferential side of the magnet 2 is restricted to achieve the effect of limiting the position of the magnet 2.

It should be noted that, as in the two embodiments described above, whether the convex portion 4 or the groove 13 is provided on the installation station to limit and fix the magnet 2, there is no restriction on the arrangement form and quantity of the magnet 2. For example, the magnet 2 and the coil assembly 3 are installed at an installation station; at least part of the projection of the coil winding 301 located at the coil assembly 3, in the direction from the panel 102 to the installation base 101, can fall on the corresponding magnet 2 installed on the same installation station. The magnet 2 has a magnetization effect on the corresponding coil winding 301, making the magnetic flux lines of the coil winding 301 more concentrated, further improving the heating efficiency, and reducing the electromagnetic field radiated to the installation base 101.

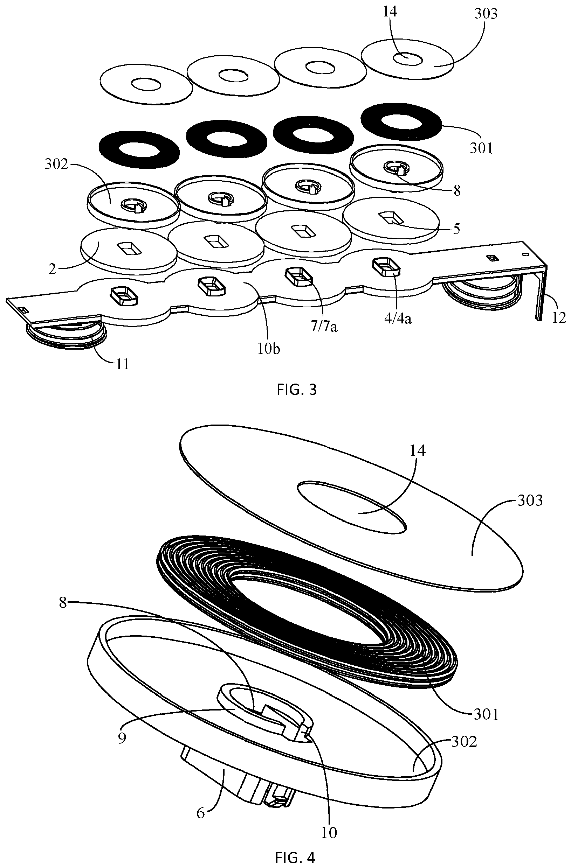

Please referring to FIGS. 3 and 4, in the above embodiment, on the basis of the first through hole 5 being opened on the magnet 2, further, the side of the installation bracket 302 close to the magnet 2 is installed with a fastener 6, and the installation base 101 is provided with a buckle portion 7. The fastener 6 passes through the first through hole 5 of the magnet 2 and is fastened on the buckle portion 7. The fixed installation of the coil assembly 3 is achieved by arranging the fastener 6 to be fastened and installed on the installation base 101; since the magnet 2 is sandwiched between the installation bracket 302 and the installation base 101, in order to facilitate that when the installation bracket 302 is installed on the installation station, its fastener 6 can pass through the magnet 2 and be fastened on the installation station, thus, the fastener 6 is provided to directly pass through the first through hole 5 on the magnet 2. On the premise of allowing the corresponding convex portion 4 to be embedded, the first through hole 5 can also be configured for the fastener 6 to insert through to improve its functional diversification and improve the compactness of the installation of the overall device; and the form of the buckle portion 7 provided on the installation station is not limited; a buckle groove may be provided at the position corresponding to the fastener 6 for the fastener 6 to pass through and fasten; or a buckle portion may be provided, when the fastener 6 is fastened to the buckle portion 7, the buckling end of the fastener 6 is correspondingly buckled on the outer periphery of the buckle portion.

The number of the fasteners 6 is not limited and can be one or more. If the fastener 6 is one, the fastener 6 can be installed in the middle of the installation bracket 302, so that when installing the installation bracket 302, its stability is improved; if there are multiple fasteners 6, multiple fasteners 6 can be arranged surrounding the installation bracket 302, so that when installing the installation bracket 302, its stability is improved; in this embodiment, one fastener 6 is provided and is located in the middle of the installation bracket 302. Compared with the solution in which multiple fasteners 6 are provided, there is only one attachment point between the installation bracket 302 and the installation base 101, which makes disassembly more convenient while ensuring that the installation bracket 302 and the installation base 101 are firmly fixed.

In this embodiment, the installation base 101 is provided with a buckle groove 7a, and the buckle groove 7a forms the corresponding buckle portion 7. When installing the coil assembly 3 on the installation station, the fastener 6 on the installation bracket 302 can be directly buckled into the corresponding buckle groove 7a. That is, the coil assembly 3 and the installation bar 10b are installed in a rigid snap connection manner to improve the reliability of the connection between the two.

In an embodiment, the buckle groove 7a is configured as an elongated groove; correspondingly, the fastener 6 is configured as an elongated shape. By arranging the buckle groove 7a and the fastener 6 to be elongated, when the coil assembly 3 is installed on the installation station, the rotation between the fastener 6 and the buckle groove 7a is prevented, so as to prevent the coil assembly 3 from rotating when installed on the installation station and improve the stability of its connection.

In an embodiment, since the first through hole 5 of the magnet 2 needs to be clamped by the convex portion 4 and can be penetrated by the fastener 6, in order to prevent the insertion of the fastener 6 from being affected when the convex portion 4 is clamped in the first through hole 5, specifically, the installation base 101 is provided with a first rib 4a on the side close to the magnet 2 and around the periphery of the buckle groove 7a to form the convex portion 4. By providing the first rib 4a around the periphery of the buckle groove 7a, the first rib 4a protrudes from the buckle groove 7a in the direction from the installation base 101 to the panel 102, so that it can be embedded into the first through hole 5 of the magnet 2 when the magnet 2 is installed on the installation base 101; and the surrounding first ribs 4a will not block the opening of the buckle groove 7a, so that the fastener 6 can be smoothly embedded into the buckle groove 7a.

In addition, since the coil winding 301 is a multi-turn coil wound sequentially from the inside to the outside, it has an inner lead on the inside and an outer lead on the outside. When the coil winding 301 is installed on the installation bracket 302, it is difficult for the inner leads located inside the installation bracket 302 to be routed out of the installation bracket 302 and connected to the circuit integrated main board 16. Therefore, the installation bracket 302 is provided with a second through hole 8, and the fastener 6 is hollow; the second through hole 8 is connected with the cavity of the fastener 6 to form a wire passage. The second through hole 8 opened through the installation bracket 302 corresponds to the inner position of the coil winding 301, that is, the inner lead of the coil winding 301 can be introduced into the wire passage from the open position of one end of the second through hole 8, and passes through the cavity of the fastener 6 to the outside of the installation bracket 302 through the wire passage, thereby facilitating the wiring installation of the coil winding 301.

In an embodiment, the installation bracket 302 is provided with a second rib 9 on an installation side where the coil winding 301 is installed and on the periphery of the second through hole 8. The second rib 9 is arranged in a semi-encircling manner to form a wire groove 10 communicating with the second through hole 8. Since the second through hole 8 is provided inside the coil winding 301, correspondingly, the second rib 9 is also provided inside the coil winding 301. The second rib 9 is in the form of semi-encircling arrangement to form a wire passage 10. The inner lead of the coil winding 301 can be introduced from the wire passage 10 into the wire passage, and the wire passage 10 limits the inner lead of the coil winding 301.

In an embodiment, the installation bracket 302 is provided with an installation slot on one of the installation sides where the coil winding 301 is installed, and the coil winding 301 is correspondingly installed in the installation slot, so that the coil winding 301 can be protected.

In addition, the coil assembly 3 also includes a heat insulation plate 303. The heat insulation plate 303 is installed on a side of the coil winding 301 away from the installation bracket 302 to prevent the heat on the panel 102 from diffusing to the coil winding 301 when the pot is placed on the panel 102 for heating; the heat insulation plate 303 and the coil winding 301 can interact with each other for bonding in one piece when not installed on the installation bracket 302 to facilitate assembly to the installation bracket 302, and the arrangement form of the heat insulation plate 303 is not limited. In this embodiment, the heat insulation plate 303 is configured as a mica sheet.

In an embodiment, the coil assembly 3 also includes a temperature measuring member 304, which can be installed on the heat insulation plate 303 or on the installation bracket 302. The temperature measuring member 304 is provided to protrude from the the coil winding 301. When the corresponding coil assembly 3 is installed in the electromagnetic cooking appliance 100 and the temperature measuring member 304 is close to the inside of the panel 102, the temperature measuring member 304 can measure the temperature of the overlapping area of the panel 102 and the corresponding coil assembly 3 to monitor the temperature of the panel 102 and the pot in real time during cooking; specifically, in this embodiment, the temperature measuring member 304 is installed on the installation bracket 302 and close to its middle position; correspondingly, a third through hole 14 can be provided in the middle position of the heat insulation plate 303, and the third through hole 14 is connected to the wire passage. When the temperature measuring member 304 is installed on the installation bracket 302, its lead wire can extend from the third through hole 14 into the wire passage and extend out of the installation bracket 302, so as to facilitate the wiring connection of the leads of the temperature measuring member 304.

Please referring to FIG. 1, the installation base 101 includes a base 10a and a plurality of installation bars 10b. The plurality of installation bars 10b are spaced apart in the base 10a. Each installation bar 10b is provided with a plurality of the buckle grooves 7a. By arranging a plurality of installation bars 10b and installing them in the base 10a at intervals, and providing a plurality of buckle grooves 7a on each installation bar 10b, correspondingly, each installation bar 10b is provided with a plurality of installation stations for installing the magnet 2 and the coil assembly 3. Each coil assembly 3 and the installation bar 10b can be independently disassembled and assembled, and each of the installation bars 10b and the base 10a can also be independently disassembled and assembled, thereby facilitating the installation, disassembly and maintenance of the components in the electromagnetic cooking appliance 100.

The base 10a forms the outer shell frame of the electromagnetic cooking appliance 100. The base 10a is semi-encircling to form an installation cavity with an open end. The base 10a includes an installation bottom plate 101a and a shell base 102a. The shell base 102a mainly functions to enclose and form an installation cavity and protect the components of the electromagnetic cooking appliance 100. The installation bottom plate 101a is placed at the bottom of the shell base 102a and is mainly configured for the internal parts of the electromagnetic cooking appliance 100 to be installed. That is, in this embodiment, the installation bottom plate 101a is configured for mounting a plurality of the installation bars 10b; the electromagnetic cooking appliance 100 also includes a cooling fan 15, a circuit integrated motherboard 16 and a display control panel 17. The cooling fan 15, the circuit integrated motherboard 16 and the display control panel 17 are all installed on the installation bottom plate 101a, and are located in the installation space formed by the plurality of the installation bars 10b and the installation bottom plate 101a in an interval manner. Compared with a plurality of the coil assemblies 3 and the corresponding magnets 2 being directly installed on the installation bottom plate 101a, when a plurality of the installation bars 10b are installed inside the installation base 101, it is spaced from the installation base 101 along the direction from the installation base 101 to the panel 102, and the installation space formed by being spaced apart from the installation bottom plate 101a is larger, thereby making it easier to install components such as the cooling fan 15 in the base 10a.

In addition, since most induction cooker frames are arranged in a rectangular form, thereby forming a rectangular installation cavity with an open top; the installation bar 10b is arranged in a long shape, so that the two ends of the installation bar 10b can be closer to the two opposite side walls of the base 10a on the side wall; a plurality of the installation bars 10b are arranged at intervals to fully utilize the installation cavity area of the base 10a.

The magnet 2 is clamped on the installation bar 10b through the convex portion 4, and the convex portion 4 can be provided on the side of the installation bar 10b close to the panel 102 or the side close to the installation bottom plate 101a. In order to ensure the reliability of the installation of the magnet 2, the magnet 2 is installed on the side of the installation bar 10b close to the panel 102, so that the separation of the magnet 2 is further restricted when the installation bracket 302 is inserted into the buckle groove 7a through the fastener 6.

In an embodiment, in order to improve the heating efficiency of the coil winding 301 for the pot placed on the panel 102, each installation bar 10b can be movable along the direction from the base 10a to the panel 102, and at least one elastic resisting member 11 is installed between installation bar 10b and the bases 10a. Among them, at least one elastic resisting member 11 is provided between each installation bar 10b and the base 10a. The elastic resisting member 11 elastically expands and contracts along the direction from the panel 102 to the base 10a, and can resist the corresponding installation bar 10b approaching the panel 102, so that the plurality of coil assemblies 3 located on the installation bar 10b are simultaneously abutted against the inside of the panel 102 to achieve better cooking and heating effect. Compared with the electromagnetic heating coil plate used in the related art, which needs to be independently installed with elastic elements to abut against the corresponding inside of the cooking panel 102, in this embodiment, only a plurality of the coil assemblies 3 need to be fixedly installed on the installation bar 10b, and the elastic resisting member 11 is installed between the installation bar 10b and the base 10a, which reduces the required number of the elastic resisting members 11 when installing multiple coil assemblies 3, and the installation operation is simpler; the form of the elastic resisting member 11 is not limited, and can be a straight spring, a tower spring, etc.

Since each installation bar 10b is elongated, correspondingly, the number of elastic resisting members 11 is at least two, and they are spaced apart along the length direction of the corresponding installation bar 10b. By setting the installation bar 10b to be elongated, two elastic resisting members 11 are installed corresponding to the lower end of the installation bar 10b and spaced along its length direction. By providing support for two ends of the installation bar 10b, a stable support effect can be achieved for the installation bar 10b; in an embodiment, the two elastic resisting members 11 are symmetrically arranged along the center line in the length direction thereof to balance the force of both ends of the installation bar 10b.

In an embodiment, since the installation space formed by the intervals between the plurality of installation bars 10b and the base 10a requires the installation of components such as the cooling fan 15, specifically, in this embodiment, in each installation bar 10b, the two elastic resisting members are respectively close to both ends of the installation bars 10b in the length direction. By making the distance between the two elastic resisting members 11 as far as possible on the side of the installation bar 10b close to the base 10a, the reserved space between the two elastic resisting members 11 is larger, thereby facilitating the arrangement and installation of the cooling fan 15 and other components.

In an embodiment, since the installation bar 10b can be movable along the direction from the base 10a to the panel 102, in order to avoid displacement in other directions during its movable stroke, at least one sliding portion 12 is provided on one side of each installation bar 10b close to the bottom plate; the base 10a is provided with at least one chute corresponding to the sliding portion 12, and the sliding portion 12 is movably installed in the corresponding chute to guide the corresponding installation bar 10b to move. By providing the sliding portion 12 embedded in the chute, the sliding portion 12 and the chute both extend and open in the direction from the base 10a to the panel 102. When the elastic resisting member is abutted against the installation bar 10b close to the panel 102, the chute restricts the sliding direction of the sliding portion 12, so that the sliding portion 12 can only move along the direction from the bottom to the mouth of the chute, and the movement direction of the installation bar 10b provided with the sliding portion 12 correspondingly is limited; there is no limit to the number of the sliding portions 12 installed on the side of each installation bar 10b close to the base 10a. In this embodiment, two of the limiting portions are installed at intervals along the width direction of the installation bar 10b and are provided close to the end of the installation bar 10b. Without affecting the installation of other components between installation bar 10b and the base 10a, the relative rotation between the installation bar 10b and the base 10a can also be restricted to improve the stability of its installation.

Please referring to FIGS. 1, 4 and 5. In another embodiment described above, based on the solution that the magnet 2 is embedded in the groove 13 for position-limiting installation, the installation base 101 includes a base 10a and a plurality of installation bars 10b, and the plurality of the installation bars 10b are arranged at intervals in the base 10a. Each installation bar 10b is provided with a plurality of grooves 13 on one side close to the base 10a. That is, in this embodiment, multiple installation bars 10b are provided at intervals on the base 10a, and the magnet 2 and the coil assembly 3 can be independently installed on the installation bars 10b, so as to facilitate installation, disassembly and maintenance of components in the electromagnetic heating unit; in addition, since the coil assembly 3 is installed on the side of the installation bar 10b close to the panel 102, and the magnet 2 is installed on one side of the installation bar 10b close to the base 10a, so on the premise of ensuring that the magnet 2 exerts a magnetization effect on the coil winding 301, the disassembly and installation of the two do not interfere with each other, so as to facilitate disassembly and assembly.

Among them, the coil assembly 3 described in this embodiment has the same structure as the coil assembly 3 in the solution in which the convex portion 4 is provided on the installation station to engage the magnet 2 as described above. The structure of the installation bar 10b is also the same as the structure of the installation bar 10b described in the above embodiment. When the elastic resisting member 11 is provided on the installation bar 10b to abut the coil assembly 3 to be close to the panel 102, the elastic resisting member 11 can be provided between the installation bracket 302 and the installation bar 10b, or between the installation bar 10b and the base 10a. In this embodiment, the elastic resisting member 11 is provided between the installation bracket 302 and the installation bar 10b, correspondingly, the installation bar 10b can be fixedly installed on the base 10a.

It can be understood that when the elastic resisting member 11 is provided between the installation bracket 302 and the installation bar 10b, one end thereof is connected fixedly to the installation bracket 302 through a buckle provided on the installation bracket 302 so as to facilitate easy assembly and installation.

In addition, since the coil winding 301, the installation bracket 302 and the magnet 2 are stacked and installed on the installation base 101 in sequence, thus, the magnet 2 can also be provided as the installation bar 10b. The buckle groove 7a is provided corresponding to each of the installation stations on the magnet 2 for installation of the coil assembly 3.

The above are only some embodiments of the present application, and do not limit the patent scope of the present application. Under the inventive concept of the present application, the equivalent structural transformations made by using the description of the present application and the contents of the accompanying drawings, or directly/indirectly used in other relevant technical fields, are all included in the protection scope of the present application.

## Claims

1. A coil assembly, **characterized by** comprising:
an installation bracket comprising two installation sides arranged oppositely;
a coil winding installed on one of the installation sides; and
a magnet provided on the other of the installation sides and being installed on an electromagnetic cooking appliance.

2. An electromagnetic cooking appliance, **characterized by** comprising:
a shell comprising an installation base and a panel covering the installation base, wherein a plurality of installation stations are provided on the installation base; and
a plurality of coil assemblies installed corresponding to the plurality of installation stations, wherein the coil assemblies comprise a coil assembly according to claim 1;
wherein, at each of the installation stations, a coil winding, an installation bracket, and a magnet are stacked in sequence along a direction from the panel to the installation base.

3. The electromagnetic cooking appliance according to claim 2, wherein at each of the installation stations, the magnet is clamped and fixed at a corresponding installation station.

4. The electromagnetic cooking appliance according to claim 3, wherein the installation base is provided with a convex portion to form the installation station; and
the magnet is provided with a first through hole, and the convex portion passes through the first through hole and clamps.

5. The electromagnetic cooking appliance according to claim 4, wherein the installation bracket is further equipped with a fastener on an installation side where the magnet is installed; the installation base is provided with a buckle portion, and the fastener passes through the first through hole of the magnet and is buckled on the buckle portion.

6. The electromagnetic cooking appliance according to claim 5, wherein the installation base is provided with a buckle groove, and the buckle groove forms a corresponding buckle portion.

7. The electromagnetic cooking appliance according to claim 6, wherein the buckle groove is an elongated groove; and
the fastener is arranged in a long shape.

8. The electromagnetic cooking appliance according to claim 6, wherein the installation base is provided with a first rib on a side close to the magnet and around a periphery of the buckle groove to form the convex portion.

9. The electromagnetic cooking appliance according to claim 6, wherein the installation bracket is provided with a second through hole, and the fastener is hollow; and
the second through hole is communicated with a cavity of the fastener to form a wire passage.

10. The electromagnetic cooking appliance according to claim 9, wherein the installation bracket is provided with a second rib on one of the installation sides where the coil winding is installed and on a periphery of the second through hole, and the second rib is arranged in a semi-encircling manner to form a wire groove communicating with the second through hole.

11. The electromagnetic cooking appliance according to claim 6, wherein the installation base comprises:
a base; and
a plurality of installation bars arranged at intervals in the base, wherein each of the installation bars is provided with a plurality of buckle grooves.

12. The electromagnetic cooking appliance according to claim 11, wherein each of the installation bars is movable along a direction from the base to the panel, and at least one elastic resisting member is installed between the installation bar and the base.

13. The electromagnetic cooking appliance according to claim 12, wherein each of the installation bars is provided with at least one sliding portion on a side close to the base; and
the base is provided with at least one chute corresponding to the sliding portion, and the sliding portion is movably provided in a corresponding chute to guide a movement of a corresponding installation bar.

14. The electromagnetic cooking appliance according to claim 3, wherein a groove is provided on the installation base to form the installation station; and
the magnet is clamped and embedded though the groove .

15. The electromagnetic cooking appliance according to claim 14, wherein the installation base comprises:
a base; and
a plurality of installation bars arranged at intervals in the base, wherein each of the installation bars is provided with a plurality of grooves on a side close to the base.
